(19)

**Europäisches Patentamt**
**European Patent Office**
**Office européen des brevets**

(11) **EP 4 711 328 A1**

(12) **EUROPEAN PATENT APPLICATION**

(43) Date of publication:
**18.03.2026 Bulletin 2026/12**

(21) Application number: **25201435.2**

(22) Date of filing: **10.09.2025**

(51) International Patent Classification (IPC):
**C01B 3/047** (2026.01)    **C22C 19/03** (2006.01)
**B01J 19/02** (2006.01)    **F02C 3/22** (2006.01)
**H01M 8/0606** (2016.01)    **H01M 8/22** (2006.01)

(52) Cooperative Patent Classification (CPC):
**C01B 3/047; B01J 19/02; C22C 19/03; F02C 3/22;**
**H01M 8/0606; H01M 8/222;** B01J 2219/0236;
B01J 2219/029; C01B 2203/0277; C01B 2203/06;
C01B 2203/066; C01B 2203/1276; C01B 2203/148;
C01B 2203/1614; C01B 2203/84;    (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **12.09.2024 KR 20240125183**
           **12.09.2024 KR 20240125184**
           **17.01.2025 KR 20250007610**
           **09.07.2025 KR 20250092600**

(71) Applicant: **SK Innovation Co., Ltd.**
**Seoul 03188 (KR)**

(72) Inventors:
• **SUNG, Jong Baek**
 **34124 Daejeon (KR)**
• **CHOI, Won Seok**
 **34124 Daejeon (KR)**
• **PARK, Hyun Joon**
 **34124 Daejeon (KR)**
• **CHOI, Jae Suk**
 **34124 Daejeon (KR)**
• **LEE, Ji Yun**
 **34124 Daejeon (KR)**
• **IM, Ju Hwan**
 **34124 Daejeon (KR)**

(74) Representative: **Prüfer & Partner mbB**
**Patentanwälte · Rechtsanwälte**
**Sohnckestraße 12**
**81479 München (DE)**

(54) **AMMONIA SUPPLY SYSTEM, HYDROGEN PRODUCTION SYSTEM, CARBON-FREE POWER GENERATION SYSTEM, AND FUEL CELL SYSTEM UTILIZING SAID AMMONIA SUPPLY SYSTEM**

(57)     Disclosed are an ammonia supply system, a hydrogen production system, a carbon-free power generation system and a fuel cell system. The ammonia supply system includes: an ammonia supply unit; an ammonia demand unit; a connection line that is arranged to connect the ammonia supply unit and the ammonia demand unit; a hydrogen supply unit; and one or more first hydrogen supply lines that are arranged to connect the hydrogen supply unit and the connection line, and are configured to supply a hydrogen gas stream, wherein the connection line includes a first pipe configured to be controlled to an average temperature of 410°C or lower and a second pipe configured to be controlled to an average temperature of greater than **410°C,** and the second pipe includes a nickel-based alloy ($N_T$) satisfying Equation 1 below.

[Equation 1]

$$T \leq 15 \ \mu m,$$

[FIG. 1]

**(Cont. next page)**

EP 4 711 328 A1

(52) Cooperative Patent Classification (CPC): (Cont.)
H01M 2008/1293

**Description**

[BACKGROUND OF THE INVENTION]

1. Field of the Invention

The disclosure of the present application relates to an ammonia supply system, a hydrogen production system, a carbon-free power generation system, and a fuel cell system.

2. Description of Related Art

Hydrocarbon-based fossil fuels such as coal and oil are used as energy sources in various industrial fields. However, such hydrocarbon-based fossil fuels are finite in quantity and are gradually being depleted. Further, carbon and carbon dioxide, in particular, are continuously emitted during combustion, thereby accelerating climate change and global warming.

Consequently, there is a growing global need for renewable and environmentally friendly new energy sources, and interest in ammonia as an alternative energy source has been increasing.

[SUMMARY OF THE INVENTION]

An object of the present disclosure is to provide an ammonia supply system with improved reaction reliability and energy efficiency.

An object of the present disclosure is to provide a hydrogen production system with improved reaction reliability and energy efficiency.

An object of the present disclosure is to provide a carbon-free power generation system with improved reaction reliability and energy efficiency.

An object of the present disclosure is to provide a fuel cell system with improved reaction reliability and energy efficiency.

An ammonia supply system according to a general aspect of the present disclosure includes: an ammonia supply unit; an ammonia demand unit; a connection line that is arranged to connect the ammonia supply unit and the ammonia demand unit; a hydrogen supply unit; and one or more first hydrogen supply lines that are arranged to connect the hydrogen supply unit and the connection line, and are configured to supply a hydrogen gas stream, wherein the connection line may include a first pipe configured to be controlled to an average temperature of 410°C or lower and a second pipe configured to be controlled to an average temperature of greater than 410°C, and wherein the second pipe may include a nickel-based alloy ($N_T$) satisfying Equation 1 below:

$$[\text{Equation 1}]$$

$$T \leq 15 \ \mu m,$$

in Equation 1, T is the maximum value of nitrided depths measured from a side surface toward a central axis of a cylindrical specimen when the nickel-based alloy ($N_T$) is prepared as a cylindrical specimen having a diameter of 2 mm and a height of 200 mm, and the cylindrical specimen is exposed to a gas stream including 97.2% by volume $NH_3$, 2.1% by volume $H_2$, and 0.7% by volume $N_2$ in a temperature environment of 500°C for 100 hours, and the nitrided depths may be measured using scanning electron microscopy (SEM) and energy dispersive X-ray spectroscopy (EDS) analysis.

In some embodiments, in Equation 1, T may be $\leq 13 \ \mu m$.

In some embodiments, the first pipe may include at least one selected from the group consisting of carbon steel, low alloy steel, stainless steel, and a nickel-based alloy.

In some embodiments, the connection line 20 may include first pipes 21 which are controlled to an average temperature of from 250°C to 410°C, or from 300°C to 410°C, and second pipes 22 which are controlled to an average temperature of from 450°C to 800°C, or from 500°C to 800°C, or from 500°C to 750°C.

In some embodiments, the ammonia supply system may further include a connection part that is arranged to connect the first pipe and the second pipe, wherein the first hydrogen supply line may be arranged to be connected to at least one of the first pipe and the second pipe, or to the connection part.

In some embodiments, the first hydrogen supply line may be arranged to be connected to the second pipe or the connection part, and a hydrogen gas stream introduced from the first hydrogen supply line into the second pipe may include hydrogen in an amount of 50% by volume or more.

In some embodiments, the ammonia supply unit and the first pipe may be arranged to be connected, and an ammonia gas stream introduced from the ammonia supply unit into the first pipe may include ammonia in an amount of 90% by volume to 100% by volume with respect to the volume of the ammonia gas stream.

In some embodiments, a flow rate ratio of the ammonia gas stream in the first pipe to the hydrogen gas stream in the first hydrogen supply line may be 1:0.02 to 1:0.50, preferably 1:0.05 to 1:0.30, or more preferably 1:0.05 to 1:0.20.

In some embodiments, a temperature difference between the ammonia gas stream in the first pipe and the hydrogen gas stream in the first hydrogen supply line may be 0°C to 400°C.

In some embodiments, the second pipe may be arranged to receive an ammonia gas stream from the first pipe, wherein the ammonia gas stream and the hydrogen gas stream may be mixable in the second pipe to form a mixed gas stream, and an average volume ratio of ammonia ($NH_3$) to hydrogen ($H_2$) in the mixed gas stream may be 70:30 to 98:2.

In some embodiments, the first hydrogen supply line may be arranged to be connected to the second pipe, and a temperature from a connection point where the first hydrogen supply line is connected to the second pipe to a downstream end may be controllable to be higher than 410°C and up to 800°C.

In some embodiments, when the entire length of the first pipe is divided into 100 equal sections and numbered from a front end to a rear end as Regions 1 to 100, the first hydrogen supply line may be arranged to be connected to the first pipe between Region 51 and Region 100.

In some embodiments, the ammonia supply system may further include one or more second hydrogen supply lines arranged to be connected to at least one of the first hydrogen supply lines to supply a second hydrogen gas stream.

In some embodiments, the ammonia supply system may further include one or more third hydrogen supply lines arranged to be connected to the second hydrogen supply line to supply a third hydrogen gas stream.

In some embodiments, the hydrogen supply unit may include an external hydrogen supply unit and an internal hydrogen supply unit, the first hydrogen supply line may be arranged to be connected to the external hydrogen supply unit to form a non-circulation line, and the second hydrogen supply line may be arranged to be connected to the internal hydrogen supply unit to form a circulation line together with the first hydrogen supply line.

In some embodiments, the second hydrogen supply line may be a return line configured to resupply a hydrogen gas stream recovered from the ammonia demand unit to the first hydrogen supply line.

A hydrogen production system according to exemplary embodiments of the present disclosure includes the above-described ammonia supply system, wherein the ammonia demand unit includes an ammonia decomposition unit and a hydrogen collection unit.

A carbon-free power generation system according to exemplary embodiments of the present disclosure includes the above-described ammonia supply system, wherein the ammonia demand unit includes an ammonia combustion unit and a turbine power generation unit.

A fuel cell system according to exemplary embodiments of the present disclosure may include the above-described ammonia supply system, wherein the ammonia demand unit includes a fuel cell unit including one or more fuel cell stacks.

The ammonia supply system according to embodiments of the present disclosure may suppress or reduce corrosion caused by ammonia.

The hydrogen production system according to embodiments of the present disclosure may exhibit improved reaction reliability and energy efficiency.

The carbon-free power generation system according to embodiments of the present disclosure may exhibit improved reaction reliability and energy efficiency.

The fuel cell system according to embodiments of the present disclosure may exhibit improved reaction reliability and energy efficiency.

If corrosion increases on the inner surfaces of pipes or other components within the ammonia supply system, the efficiency of hydrogen generation may decrease and the flow rate or purity of the generated hydrogen may become non-uniform.

However, in the ammonia supply system according to embodiments of the present disclosure, the structural stability of apparatuses such as pipes may be maintained, whereby the efficiency and/or reproducibility of the hydrogen production reaction may be ensured, and consequently hydrogen of uniform quality may be supplied more stably. In addition, according to embodiments of the present disclosure, during long-term operation, combustion reactions or electrochemical reactions using hydrogen as a fuel (e.g., carbon-free power generation or fuel cell reactions) may be stably performed, thereby reducing performance degradation or output non-uniformity of the entire system.

According to another aspect of the present disclosure, for the conversion and utilization of ammonia as an energy vector, a coupled renewable energy system using the hydrogen production system and the carbon-free power generation system or the fuel cell system may be provided.

[BRIEF DESCRIPTION OF THE DRAWINGS]

The above and other objects, features and other advantages of the present disclosure will be more clearly understood from the following detailed description taken in conjunction with the accompanying drawings, in which:

FIG. 1 is a schematic block diagram of an ammonia supply system according to an embodiment of the present disclosure;
FIG. 2 is a schematic block diagram of a carbon-free power generation system according to an embodiment of the present disclosure;
FIG. 3 is a schematic block diagram of a fuel cell system according to an embodiment of the present disclosure;
FIG. 4 is a graph illustrating the results of a corrosion resistance evaluation according to operating temperature when a first chamber was operated for 36 hours in Examples 1, 1-1, and 1-2;
FIG. 5 is a graph illustrating the results of a corrosion resistance evaluation according to operating temperature when the first chamber was operated for 100 hours in Examples 1, 1-1, and 1-2;
FIG. 6 is a set of scanning electron microscope (SEM) images showing cross-sections of nitrided specimens after the corrosion resistance evaluation of the chamber according to the operating time in Examples 1 to 5;
FIGS. 7A and 7B are scanning electron microscope (SEM) images showing cross-sections of nitrided specimens after the corrosion resistance evaluation of a second chamber according to the operating time in Examples 1 to 5 and Comparative Examples 1 to 4;
FIG. 8 is a graph illustrating the results of a corrosion rate evaluation of the first chamber in Examples 1 to 5; and
FIG. 9 is a graph illustrating the results of a corrosion rate evaluation of the second chamber in Example 1 and Comparative Examples 2 and 3.

[DETAILED DESCRIPTION OF THE INVENTION]

**<Ammonia supply system>**

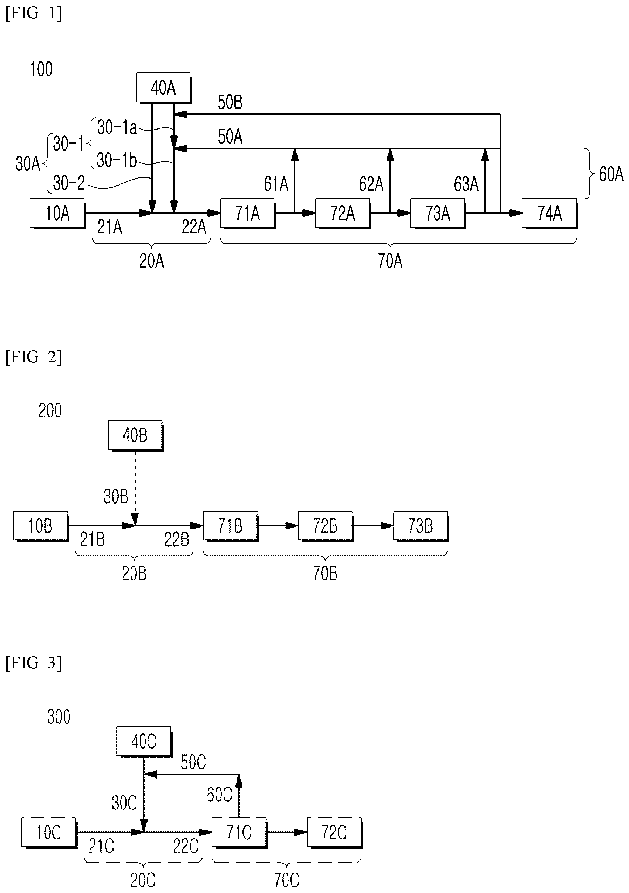

FIG. 1 is a schematic block diagram of an ammonia supply system according to an embodiment of the present disclosure.
An ammonia supply system 100 according to embodiments of the present disclosure includes ammonia supply units 10A, 10B and 10C (hereinafter collectively referred to as "ammonia supply unit 10"); ammonia demand units 70A, 70B and 70C (hereinafter collectively referred to as "ammonia demand unit 70"); connection lines 20A, 20B and 20C (hereinafter collectively referred to as "connection line 20") that connect the ammonia supply unit 10 and the ammonia demand unit 70; a hydrogen supply unit; and one or more first hydrogen supply lines 30A, 30B and 30C (hereinafter collectively referred to as "first hydrogen supply line 30") that connect the hydrogen supply unit and the connection line 20 and are configured to supply a hydrogen gas stream.
The connection line 20 includes first pipes 21A, 21B and 21C (hereinafter collectively referred to as "first pipe 21") which are controlled to an average temperature of 410°C or lower, and second pipes 22A, 22B and 22C (hereinafter collectively referred to as "second pipe 22") which are controlled to an average temperature of greater than 410°C.
For example, an ammonia supply system 100 may include an ammonia supply unit 10; an ammonia demand unit 70; a connection line 20 that is arranged to connect the ammonia supply unit 10 and the ammonia demand uni 70t; a hydrogen supply unit; and one or more first hydrogen supply lines 30 that are arranged to connect the hydrogen supply unit and the connection line 20, and are configured to supply a hydrogen gas stream, wherein the connection line 20 may include a first pipe 21 configured to be controlled to an average temperature of 410°C or lower, or from 250°C to 410°C, or from 300°C to 410°C and a second pipe 22 configured to be controlled to an average temperature of from 450°C to 800°C, or from 500°C to 800°C, or from 500°C to 750°C.
The second pipe 22 includes a nickel-based alloy ($N_T$) satisfying Equation 1 below:

$$[\text{Equation 1}]$$

$$T \leq 15 \ \mu m,$$

in Equation 1, T is the maximum value of nitrided depths measured from a side surface toward a central axis of a cylindrical specimen when the nickel-based alloy ($N_T$) is prepared as a cylindrical specimen having a diameter of 2 mm and a height of 200 mm, and the cylindrical specimen is exposed to a gas stream including 97.2% by volume ("vol%") $NH_3$, 2.1 vol% $H_2$,

and 0.7 vol% $N_2$ in a temperature environment of 500°C for 100 hours. The nitrided depth(s) may be measured using scanning electron microscopy (SEM) and energy dispersive X-ray spectroscopy (EDS) analysis.

Therefore, the ammonia supply system 100 may be capable of suppressing or reducing corrosion inside the device, equipment, and piping during the process of supplying ammonia.

As used herein, the nickel-based alloy may be used to mean all alloys that have nickel as a main component and have one or more metal elements such as chromium (Cr), iron (Fe), molybdenum (Mo), cobalt (Co), aluminum (Al), titanium (Ti), and tungsten (W) added thereto.

Further, as used herein, an alloy satisfying Equation 1 above is referred to as a "nickel-based alloy ($N_T$)" to distinguish it from general nickel-based alloys.

High-purity ammonia may cause rapid corrosion at high temperatures exceeding 410°C. To address this problem, nitridation may be effectively prevented when transporting ammonia at the above-described high temperatures by forming the interior or entire portion of the pipe with the nickel-based alloy ($N_T$).

For example, when a metal is exposed to an environment containing high-purity ammonia at high temperatures, the ammonia may react with the metal, causing a nitridation reaction. This nitridation reaction may form nitrided products extending from the surface of the metal into the interior region.

For example, T represented by Equation 1 may be measured as follows:
The nickel-based alloy ($N_T$) may not significantly promote nitridation even at temperatures exceeding 410°C, thereby suppressing or reducing the formation of nitridation products.

For example, when a nickel-based alloy ($N_T$) cylindrical specimen is exposed to a gas stream including 97.2 vol% $NH_3$, 2.1 vol% $H_2$, and 0.7 vol% $N_2$ in a temperature environment of 500°C for 100 hours, a nitrided or non-nitrided cylindrical specimen may be obtained.

As used herein, the term 'nitrided layer or nitrided parts' refers to a region of the metal in which nitrogen has diffused to form a metal nitride (MxNy) structure, which can be experimentally confirmed, for example, by XRD analysis or SEM-EDS. In the above region, a metal nitride phase may be detected by X-ray diffraction (XRD) analysis at $2\theta$ values corresponding to MxNy, such as Fe4N, CrN, or other metal nitride phases, depending on the base metal. The term 'non-nitrided layer or non-nitrided parts' refers to a region of the metal substrate in which such a nitride phase is not observed under the same analytical conditions.

For example, 41 specimens may be obtained by cutting the nitrided cylindrical specimen at 5 mm intervals along the height from one end, in a direction perpendicular to the height. SEM images may be taken of the cut circular cross-sections of the obtained specimens using a scanning electron microscope (SEM). The elemental composition within the SEM images may be analyzed using the energy dispersive X-ray spectroscopy (EDS) function of the scanning electron microscope (SEM).

As a non-limiting example, a focused ion beam-scanning electron microscope (FIB-SEM) may be used as the scanning electron microscope. For example, a plasma-focused ion beam-scanning electron microscope manufactured by Thermo Fisher Scientific may be used.

In other words, nitrides are not present in a non-nitrided metal. The elemental composition in the SEM images can be analyzed using the energy-dispersive X-ray spectroscopy (EDS) function of the scanning electron microscope (SEM), which allows for the identification of nitrides.

Based on the analytical results of the elemental composition, nitrided depths may be measured from three arbitrary points on the outermost edge of the circular cross-section toward the central axis.

The nitrided depth may refer to the depth in a direction perpendicular to the side surface of the cylindrical specimen, i.e., a direction extending toward the central axis of the cylinder.

The corrosion resistance may be considered higher when the maximum value among the nitrided depths is smaller.

The average temperature may be calculated, for example, as the arithmetic mean temperature of the inlet and outlet temperatures of each pipe, or as the mass flow-weighted average temperature or the spatial average temperature within each pipe. The average temperature may be appropriately selected depending on the flow conditions, measurement environment, and system configuration, and may include an error range of $\pm 10$°C to $\pm 1$°C depending on the measurement conditions and environment.

In some embodiments, the overall temperature of the first pipe 21 may be controlled to 410°C or lower, and the overall temperature of the second pipe 22 may be controlled to more than 410°C.

In some embodiments, in Equation 1, T may be $\leq 13$ $\mu$m, and for example, T may be $\leq 12$ $\mu$m. This may reduce ammonia consumption caused by the generation of byproducts during the ammonia supply process and may help prevent long-term performance degradation of the device and/or may increase overall energy efficiency through mitigating loss in catalytic activity and/or selectivity.

In some embodiments, the nickel-based alloy ($N_T$) may include nickel in an amount of 40% by weight ("wt%") to 80 wt%. The nickel content is based on the total weight of the nickel-based alloy ($N_T$),

In some embodiments, the nickel content of the nickel-based alloy ($N_T$) may be, for example, 40 wt% to 78 wt%, 50 wt% to 75 wt%, 52 wt% to 75 wt%, or 55 wt% to 70 wt%.

In some embodiments, the nickel-based alloy ($N_T$) may include, for example, a Ni-Cu-Fe-based alloy, a Ni-Cr-Mo-W-based alloy, a Ni-Cr-Fe-Mo-based alloy, and/or a Ni-Cr-Co-W-based alloy.

The nickel-based alloy (NT) may include, for example, one or more alloys selected from the group consisting of UNS N06601, UNS N06625, UNS N06690, UNS N07718, UNS N07792, and UNS N06002, as classified under the unified numbering system (UNS). Accordingly, the ammonia supply system 100 may be capable of effectively preventing or suppressing corrosion within the connection line 20, thereby achieving improved reaction reliability and energy efficiency.

In some embodiments, the first pipe 21 may include at least one selected from the group consisting of carbon steel, low alloy steel, stainless steel, and a nickel-based alloy.

The low-alloy steel may include, for example, 1 wt% to 35 wt%, 1 wt% to 30 wt%, or 5 wt% to 35 wt% of an alloying element based on the total weight. For example, the alloying elements may include carbon, silicon, manganese, nickel, aluminum, chromium, phosphorus, sulfur, molybdenum, copper, and/or nitrogen. The stainless steel may include, for example, austenitic stainless steel, ferritic stainless steel, martensitic stainless steel and/or pearlite stainless steel.

Therefore, damage such as micro-cracks in the pipe walls to the first pipe 21 may be suppressed or reduced, thereby preventing leakage of hazardous ammonia and reducing costs.

In some embodiments, all or part of the interior or the entirety of the second pipe 22 may be formed of the nickel-based alloy ($N_T$) satisfying Equation 1 above. Accordingly, the thermal conductivity of the second pipe 22 may not easily degrade even after repeated use, thereby achieving improved operational stability and energy efficiency.

In some embodiments, a connection part that connects the first pipe 21 and the second pipe 22 may be further included, and the first hydrogen supply line 30 may be connected to at least one of the first pipe 21 and the second pipe 22, or to the connection part.

Non-limiting examples of the connection parts may include connection members, and the connection members may include connectors, flanges, fittings, valves, and other coupling components such as clamps, ferrules or a combination thereof.

In some embodiments, the first hydrogen supply line 30 may be connected to, for example, the first pipe 21.

In some embodiments, the first hydrogen supply line 30 may be connected to the second pipe 22.

In some embodiments, the first hydrogen supply line 30 may be connected to the first pipe 21 and the second pipe 22, respectively.

In some embodiments, the first hydrogen supply line 30 may be connected to the connection part together with the first pipe 21 and the second pipe 22 by a connector, and the connector may be a T-shaped connector.

In some embodiments, when the entire length of the first pipe 21 is divided into 100 equal sections and numbered from a front end to a rear end as Regions 1 to 100, the first hydrogen supply line 30 may be connected to the first pipe 21 between Region 51 and Region 100.

In some embodiments, when the entire length of the second pipe 22 is divided into 100 equal sections and numbered from a front end to a rear end as Regions 1 to 100, the first hydrogen supply line 30 may be connected to the second pipe 22 between Regions 1 and 80, and for example, may be connected to the second pipe 22 between Regions 1 and 50, or between Regions 1 and 40.

In some embodiments, the first hydrogen supply line 30 may be connected to the second pipe 22 or the connection part, and the hydrogen gas stream introduced from the first hydrogen supply line 30 into the second pipe 22 may contain hydrogen at a concentration of 50 vol% or more, for example, 50 vol% to 100 vol%, or 70 vol% to 100 vol%. This may reduce the volume, cost, and power consumption of the required equipment.

In some embodiments, the ammonia supply unit 10 and the first pipe 21 may be connected, and the ammonia gas stream introduced from the ammonia supply unit 10 into the first pipe 21 may contain ammonia at a concentration of 99 vol% to 100 vol%, for example, 99.9 vol% to 100 vol%. Accordingly, the supply efficiency of the ammonia supply system 100 may be improved, which may not only effectively reduce the volume of the entire device, but also reduce the energy required for operation, thereby stably achieving excellent ammonia decomposition efficiency. In some embodiments, a flow rate ratio of the ammonia gas stream in the first pipe 21 to the hydrogen gas stream in the first hydrogen supply line 30 may be 1:0.02 to 1:0.50, for example, 1:0.05 to 1:0.30, 1:0.05 to 1:0.25, 1:0.05 to 1:0.20, or 1:0.05 to 1:0.16. Accordingly, the corrosion rate due to nitridation in the entire internal region of the connection line 20 may be more effectively reduced.

In some embodiments, a temperature difference between the ammonia gas stream in the first pipe 21 and the hydrogen gas stream in the first hydrogen supply line 30 may be 0°C to 400°C, and may be, for example, 0°C to 300°C, 0°C to 200°C, 0°C to 250°C, or 0°C to 100°C. This allows the temperature variation (increase and decrease) of the ammonia gas stream throughout the interior of the connection line 20 to be easily controlled.

In some embodiments, an ammonia gas stream may be introduced from the first pipe 21 into the second pipe 22, and the ammonia gas stream and the hydrogen gas stream may be mixed within the second pipe 22 to form a mixed gas stream, wherein the average volume ratio of ammonia ($NH_3$) to hydrogen ($H_2$) in the mixed gas stream may be 70:30 to 98:2. Accordingly, the formation of nitrification products within the second pipe 22 may be suppressed or reduced.

In some embodiments, the first hydrogen supply line 30 may be connected to the second pipe 22, and a

EP 4 711 328 A1

temperature from a connection point where the first hydrogen supply line 30 is connected to the second pipe 22 to a downstream end may be controlled to be greater than 410°C and up to 800°C. Accordingly, corrosion of the second pipe 22 may be further prevented.

In some embodiments, the system may include one or more second hydrogen supply lines 50A, 50B and 50C (hereinafter collectively referred to as "second hydrogen supply line 50") connected to at least one of the first hydrogen supply lines 30 to supply a hydrogen gas stream. In some embodiments, the system may include one or more third hydrogen supply lines 60A, 61A, 62A, 63A and 60C (hereinafter collectively referred to as "third hydrogen supply line 60") connected to the second hydrogen supply line 50 to supply a hydrogen gas stream. The hydrogen gas streams supplied through the first to third hydrogen supply lines may be referred to as first to third hydrogen gas streams, respectively.

Although the hydrogen gas stream, which may comprise the first, second and/or third hydrogen gas stream(s), may be supplied in the order of the third, second, and first hydrogen supply lines, the structural configuration may be such that the second hydrogen supply line is branched from the first hydrogen supply line, and the third hydrogen supply line is further branched from the second hydrogen supply line.

In some embodiments, the hydrogen supply unit may include external hydrogen supply units 40A, 40B and 40C, and an internal hydrogen supply unit.

As a non-limiting example, the external hydrogen supply unit may include a high-pressure vessel, such as a cylinder bomb in which hydrogen ($H_2$) is stored, a tank, a pipeline, or other suitable pressurized gas storage containers.

In some embodiments, the first hydrogen supply line 30 may be connected to the external hydrogen supply unit 40 to form a non-circulation line.

In an embodiment, the internal hydrogen supply unit may include the second hydrogen supply line 50, or the second hydrogen supply line 50 and the third hydrogen supply line 60. For example, the second hydrogen supply line 50 may be connected to the first hydrogen supply line 30, and together they may form a circulation line. For example, the third hydrogen supply line (60), the second hydrogen supply line (50), and the first hydrogen supply line (30) may be sequentially connected so that they together may form a circulation line.

In some embodiments, the second hydrogen supply line 50, or the second hydrogen supply line 50 and the third hydrogen supply line 60t may be a return line configured to resupply a hydrogen gas stream recovered from the ammonia demand unit 70 to the first hydrogen supply line 30.

For example, the first hydrogen supply line 30 connected to the external hydrogen supply unit may independently supply a hydrogen gas stream in a single direction.

For example, the second hydrogen supply line 50 may resupply a hydrogen gas stream recovered from the ammonia demand unit 70 to the first hydrogen supply line 30, and the resupplied hydrogen gas stream may be introduced into the second pipe 22 for recirculation.

For example, the third hydrogen supply line 60 may supply a hydrogen gas stream recovered from the ammonia demand unit 70 to the second hydrogen supply line 50, the second hydrogen supply line 50 may resupply the hydrogen gas stream to the first hydrogen supply line 30, and the supplied hydrogen gas stream may flow into the second pipe 22 and be circulated.

Referring to FIG. 1, when the ammonia supply system 100 includes both the non-circulation line and the circulation line, the ammonia supply system 100 may include two or more first hydrogen supply lines 30-1, 30-2 connected to each of the external hydrogen supply unit 40 and the second hydrogen supply line 50, or may include one or more first hydrogen supply lines 30-1 in which the external hydrogen supply unit 40 is connected to one end and the second hydrogen supply line 50 is connected between both ends, or may include both of them (30-1 and 30-2). The first hydrogen supply line 30-1, in which the external hydrogen supply unit 40 is connected to one end and the second hydrogen supply line 50 is connected between both ends, may include a first sub-line 30-1a connecting from the external hydrogen supply unit 40 to a point where the second hydrogen supply line 50 is connected, and a second sub-line 30-1b connecting from the point where the second hydrogen supply line 50 is connected to the opposite end of the first hydrogen supply line 30-1. From the point where the second hydrogen supply line 50 joins the first hydrogen supply line 30-1, a hydrogen gas stream supplied from the external hydrogen supply unit 40 and a hydrogen gas stream supplied from the second hydrogen supply line 50 may be mixed and supplied as a single stream to the opposite end. With respect to the point where the second hydrogen supply line 50 is connected, reference may be made to the above description in this specification regarding the connection part.

In some embodiments, the ammonia supply system 100 may further include a monitoring unit including a temperature detection sensor, a flow detection sensor, and other sensors such as pressure detection, level and/or moisture/humidity sensors, or a combination of two or more of the aforementioned sensors. The monitoring unit may include, for example, a controller configured to detect temperature, flow rate, pressure, fluid level and/or moisture, and control them within a predetermined range based on the detected values, and may further include a pressure detection sensor, a gas composition analyzer, a leak detection sensor, or an alarm unit.

In some embodiments, each connection line 20 and/or each pipe may further include a connection member that connects the pipes. Non-limiting examples of the connection members may include connectors, flanges, fittings, valves, and other coupling components such as clamps, ferrules or a combination thereof.

As a non-limiting example, each of the first to third hydrogen supply lines 60 may be formed of a pipe, tube, or other suitable gas supply channels, hoses or conduits.

As a non-limiting example, the first to third hydrogen supply lines 60 may include at least one selected from carbon steel, low alloy steel, and stainless steel.

In some embodiments, the ammonia supply unit 10 may store and supply ammonia. The ammonia supply unit 10 may store and supply, for example, ammonia in the form of gaseous state (hereinafter, also abbreviated as "gaseous ammonia") or ammonia in the form of liquid state (hereinafter, also abbreviated as "liquid ammonia").

When the ammonia supply unit 10 stores and supplies liquid ammonia, for example, the ammonia supply unit 10 may further include a vaporization unit. For example, liquid ammonia may be supplied from an ammonia storage container to the vaporization unit, and gaseous ammonia vaporized by a vaporizer may be supplied from the vaporization unit to the connection line 20.

As a non-limiting example, the ammonia supply unit 10 may include a high-pressure vessel, such as a cylinder bomb in which ammonia ($NH_3$) is stored, a tank, or other gas storage cylinders or cannisters.

The ammonia supply unit 10 may further include a preheating unit connected to the vaporization unit, and the gaseous ammonia may be preheated by a preheater in the preheating unit, and then supplied to the connection line 20.

In some embodiments, the ammonia demand unit 70 may include a hydrogen generation device that converts ammonia into hydrogen, a combustion device that directly uses ammonia as a fuel, or a fuel cell device that utilizes ammonia-derived hydrogen.

These devices may be used for various purposes within the ammonia supply system 100, such as energy generation, providing a heat source, power generation, or supplying a reducing agent for chemical reactions.

The above-described connection line 20 and/or the first to third hydrogen supply lines 60 may be variously modified as necessary.

As a non-limiting example, the ammonia supply unit 10, the ammonia demand unit 70, the hydrogen supply unit, the above-described connection line 20 and/or the first to third hydrogen supply lines 60 may each include one or more inlets and/or outlets through which gas streams are introduced or discharged, and may further include one or more control valves for controlling them.

In a non-limiting embodiment, the ammonia supply system 100 may include a first temperature control device configured to maintain the average temperature of the first pipe 21 at 410°C or lower and a second temperature control device configured to maintain the average temperature of the second pipe 22 at greater than 410°C. For example, the first and second temperature control devices may include a heater, a thermocouple, and/or a controller. The heater may be a heating means operated by, for example, an electric resistance heater, induction heater, or external heat source. The thermocouple may detect, in real time, the temperatures inside the first pipe 21 and the second pipe 22, respectively, and the controller may control the operation of the heater based on the detected temperature information so as to maintain the temperature within a predetermined range. The configuration or installation method of the temperature control device is not particularly limited.<**Hydrogen production system**>

A hydrogen production system 170 according to embodiments of the present disclosure includes the above-described ammonia supply system 100, and the ammonia demand unit 70 includes an ammonia decomposition unit 71A and a hydrogen collection unit 72A.

For example, when the ammonia demand unit 70 includes the ammonia decomposition unit 71A and the hydrogen collection unit 72A, the ammonia supply system 100 may be provided as a hydrogen production system 170.

In some embodiments, the hydrogen production system 170 may include, for example, a vaporization unit and/or a preheating unit included in the ammonia supply unit 10, an ammonia decomposition chamber included in the ammonia decomposition unit 71A, and the hydrogen collection unit 72A, and may further include a hydrogen purification unit 73A, a hydrogen storage unit 74A, an ammonia collection unit, and/or a heat supply unit including a combustor. These components may be connected to each other via sub-lines.

Each of the sub-lines may be formed of a pipe, tube, or other material.

As a non-limiting example, the sub-line may include at least one selected from carbon steel, low alloy steel, and stainless steel.

The layout, length, and other parameters of the above-described sub-lines may be variously modified as needed.

In some embodiments, the ammonia demand unit 70 may include the ammonia decomposition unit 71A, the hydrogen collection unit 72A, and the hydrogen purification unit 73A.

The hydrogen collection unit 72A may include a device that collects and separates hydrogen gas generated through the ammonia decomposition reaction, and for example, may include a gas-solid separator, an adsorption tower, an absorption column, a temperature sweep adsorption (TSA) device, a scrubber, a condenser, a membrane separator, etc.

The hydrogen purification unit 73A may include a device for removing impurities (e.g., nitrogen, unreacted ammonia, moisture, etc.) from the collected hydrogen gas to obtain high-purity hydrogen, and may include, for example, a pressure swing adsorption (PSA) device, a vacuum pressure swing adsorption (VPSA) device, a membrane-based purifier, etc.

For example, the gases described above may be separated and/or collected using adsorption-based techniques such as temperature swing adsorption (TSA), pressure swing adsorption (PSA), or vacuum pressure swing adsorption (VPSA).

The hydrogen collection unit 72A and/or the hydrogen purification unit 73A may include an adsorbent. The adsorbent may include, for example, $CaCl_2/Al_2O_3$, $MgCl_2/Al_2O_3$, silica, alumina, activated carbon, and/or zeolite. The zeolite may have a framework structure such as MFI, CHA, CHA-Cs, CHI, ERI, FAU, FER, GOO, HEU, LTA, MER, MON, MOR, RHO, AEI, AFX, DDR, LEV, RTH, and other known zeolitic framework structures, or a combination thereof.

In one embodiment, the structure of the zeolite may be, for example, in the form of CHA, LTA, and/or FAU.

The hydrogen collection unit 72A may include an adsorption tower filled with an adsorbent. The adsorption tower may be, for example, a configuration in which one or more adsorption towers are connected in series or in parallel, a configuration in which one or more towers are connected within a single adsorption tower, or a combination thereof.

In some embodiments, the hydrogen gas stream recovered from the ammonia decomposition unit 71A, the hydrogen collection unit 72A, and/or the hydrogen purification unit 73A may be supplied to the first hydrogen supply line 30 via the second hydrogen supply line 50 and/or the third hydrogen supply line 60. The second hydrogen supply line 50 and/or the third hydrogen supply line 60 may be provided as a circulation line or a return line.

For example, a sub-line may connect the ammonia decomposition unit 71A and the hydrogen collection unit 72A, another sub-line may connect the hydrogen collection unit 72A and the hydrogen purification unit 73A, and/or the hydrogen purification unit 73A may be connected to the third hydrogen supply line 60. The third hydrogen supply line 60 may be connected to the second hydrogen supply line 50, which in turn may be connected to the first hydrogen supply line 30.

The hydrogen gas stream may include hydrogen ($H_2$), and may further include, for example, ammonia ($NH_3$) and/or moisture ($H_2O$).

In some embodiments, the ammonia decomposition unit 71A may include an ammonia decomposition reactor, and the ammonia decomposition reactor may include a catalyst chamber filled with a catalyst.

In some embodiments, the hydrogen gas stream recovered after ammonia decomposition in the ammonia demand unit 70 may be supplied to the second hydrogen supply line 50 and/or the third hydrogen supply line 60.

In some embodiments, the hydrogen gas stream recovered after separating ammonia may also be supplied to the second hydrogen supply line 50 and/or the third hydrogen supply line 60.

In some embodiments, the unrefined hydrogen gas stream recovered after hydrogen purification may be supplied to the second hydrogen supply line 50 and/or the third hydrogen supply line 60, wherein the composition of the hydrogen gas stream may include, for example, 10 vol% to 30 vol% hydrogen.

For example, the composition of the hydrogen gas stream supplied to the second hydrogen supply line 50 and/or the third hydrogen supply line 60 from the sub-line connecting the ammonia decomposition unit 71A and the hydrogen collection unit 72A may be the same as that of the gas stream introduced from the ammonia decomposition unit 71A into the gas inlet of the hydrogen collection unit 72A.

For example, the composition of the hydrogen gas stream supplied to the second hydrogen supply line 50 and/or the third hydrogen supply line 60 from the sub-line connecting the hydrogen collection unit 72A and the hydrogen purification unit 73A may be the same as that of the gas stream introduced from the hydrogen collection unit 72A into the gas inlet of the hydrogen purification unit 73A.

The above-described hydrogen gas stream may further include nitrogen, water vapor, or other trace components such as carbon monoxide, nitrogen, hydrocarbons, sulfur gases and/or particulate matter.

In some embodiments, the hydrogen production system 170 may further include the hydrogen storage unit 74A.

The hydrogen storage unit 74A may, for example, store hydrogen separated from at least one of the hydrogen collection unit 72A and the hydrogen purification unit 73A.

As a non-limiting example, the hydrogen storage unit 74A may be a hydrogen storage tank.

In some embodiments, the purity of the hydrogen produced by the hydrogen production system 170 and stored in the hydrogen storage unit 74A may be 99 vol% or more, and may be, for example, 99.9 vol% or more.

In some embodiments, the production rate of the hydrogen stored in the hydrogen storage unit 74A may be 1,300 $Nm^3/h$ or more, and may be, for example, 1,300 $Nm^3/h$ to 800,000 $Nm^3/h$.

## <Carbon-free power generation system>

FIG. 2 is a schematic block diagram of a carbon-free power generation system 200 according to an embodiment of the present disclosure.

A carbon-free power generation system 200 according to embodiments of the present disclosure includes the above-described ammonia supply system 100, and the ammonia demand unit 70 includes an ammonia combustion unit 71B and a turbine power generation unit 72B. Accordingly, electrical energy may be stably generated without a decrease in long-term reaction reliability and energy efficiency.

The turbine power generation unit may include a gas turbine generator.

As a non-limiting example, the gas turbine generator may include a gas turbine that converts thermal energy generated by fuel combustion into rotational energy, and a generator configured to generate electricity using the rotational energy of the gas turbine.

The gas turbine generator may generate electricity by driving a turbine through fuel combustion, thereby realizing a carbon-free power generation method that does not emit carbon dioxide ($CO_2$), or at least significantly reduce carbon emissions.

In the gas turbine generator, waste heat may be generated through various paths in the form of combustion gas, exhaust gas, etc.

In some embodiments, the carbon-free power generation system 200 may further include a waste heat recovery and supply unit configured to recover waste heat generated from the turbine power generation unit and supply the heat to the connection line 20, or other components of the reactor or system. As non-limiting examples, the waste heat recovery unit may include a heat exchanger, a waste heat recovery boiler (WHRB), a multi-tube heat recovery device, or an organic Rankine cycle (ORC) system.

In some embodiments, the carbon-free power generation system 200 may further include an exhaust gas treatment unit 73B. The exhaust gas treatment unit 73B may, for example, treat exhaust gas generated from a gas turbine power generation unit or a combustion unit by cooling, filtering, neutralizing, or adsorbing the exhaust gas.

As non-limiting examples, the exhaust gas treatment unit may include a scrubber, a selective catalytic reduction (SCR) device, an oxidation catalyst, or an activated carbon adsorption device.

In some embodiments, the carbon-free power generation system 200 may further include a waste heat control valve, an exhaust gas regulator, and/or an intermediate heat storage unit to improve heat exchange efficiency or control operating conditions.

### <Fuel cell system>

FIG. 3 is a schematic block diagram of a fuel cell system 300 according to an embodiment of the present disclosure.

A fuel cell system 300 according to embodiments of the present disclosure includes the above-described ammonia supply system 100, and the ammonia demand unit 70 includes a fuel cell unit 71C including one or more fuel cell stacks. Accordingly, electrical energy may be generated without a decrease in long-term reaction reliability and energy efficiency.

In some embodiments, the fuel cell system 300 may be a solid oxide fuel cell (SOFC) system.

As a non-limiting example, the solid oxide fuel cell unit may further include a fuel supply unit connected to the fuel supply pipe, a fuel storage unit connected to the fuel supply unit, a fuel cell unit connected to the fuel storage unit and configured to receive fuel and generate electrical energy, a heat supply unit, a waste heat recovery unit, and/or a refrigerant circulation path.

For example, the fuel cell stack may include a cathode and an anode, and a solid electrolyte interposed therebetween. The solid electrolyte may include, for example, a solid oxide capable of conducting oxygen or hydrogen ions.

As a non-limiting example, the cathode may be connected to an air supply unit to receive heated and pressurized air supplied from outside.

As a non-limiting example, the anode may be connected to the fuel supply unit to receive fuel such as hydrogen or hydrogen-containing gas supplied from the fuel supply unit.

In some embodiments, the fuel cell system 300 may further include the above-described ammonia decomposition unit, and may further include a hydrogen collection unit in conjunction with the ammonia decomposition unit. This allows for the efficient supply of hydrogen and/or hydrogen-containing gas to the fuel supply unit.

In some embodiments, the second hydrogen supply line 50 and/or the third hydrogen supply line 60 may be connected to the fuel cell unit. After power generation in the fuel cell unit, a hydrogen gas stream included in the unreacted feed may be supplied to the circulation line including the second hydrogen supply line 50 and/or the third hydrogen supply line 60.

In some embodiments, the fuel cell system 300 may further include an exhaust gas treatment unit 72C. Reference may be made to the above-described exhaust gas treatment unit.

According to another aspect of the present disclosure, for the conversion and utilization of ammonia as an energy vector, a coupled renewable energy system using the above-described hydrogen production system 170 and the above-described carbon-free power generation system 200 or fuel cell system 300 may be provided. Due to its high energy density and ease of handling, ammonia may serve as a promising, cross-sector energy vector for storing and transporting renewable energy and/or hydrogen. In some embodiments, a combination or coupling of the hydrogen production system 170 comprising the above-described ammonia supply system 100 with the fuel cell system 300 may be provided. Such coupled energy system may be renewable and essentially operate carbon neutral, that is, it may generate electricity at significantly reduced carbon emissions.

**Example 1**

An ammonia supply system was designed, including an ammonia storage tank made of SUS304, a first pipe made of SUS304 connected to the ammonia storage tank, a second pipe made of Inconel 625 connected to the first pipe, and a hydrogen generation device connected to the second pipe. In the ammonia supply system, the first pipe and the second pipe were connected using a T-shaped connector, and a first hydrogen supply line was also connected to the connector. The first hydrogen supply line was connected to a hydrogen cylinder bomb containing hydrogen ($H_2$). Furthermore, the hydrogen generation device and the first hydrogen supply line were connected via the second hydrogen supply line to form a circulation line.

The ammonia supply system was implemented under the conditions listed in Tables 1 and 2 below. The operating temperature of the first pipe in Table 1 refers to the average temperature of the first pipe. The operating temperature of the second pipe in Table 2 refers to the average temperature of the second pipe.

For reference, except for the matters described above, the hydrogen generation device can be readily implemented by those skilled in the art by applying structures conventionally used for hydrogen generation. Since such structures are well known, it is not necessary to illustrate them in a separate figure, and thus they are omitted in the present specification.

**Example 2**

The same system as in Example 1 was implemented under the conditions listed in Tables 1 and 2 below, except that the second pipe was made of Inconel 601.

**Example 3**

The same system as in Example 1 was implemented under the conditions listed in Tables 1 and 2 below, except that the first pipe was made of carbon steel.

**Example 4**

The same system as in Example 1 was implemented under the conditions listed in Tables 1 and 2 below.

**Example 5**

The same system as in Example 1 was implemented under the conditions listed in Tables 1 and 2 below.

**Comparative Example 1**

The same system as in Example 1 was implemented under the conditions listed in Tables 1 and 2 below, except that the first pipe was omitted and the second pipe was directly connected to the ammonia storage tank.

**Comparative Example 2**

The same system as in Example 1 was implemented under the conditions listed in Tables 1 and 2 below, except that the second pipe was made of SUS304.

**Comparative Example 3**

The same system as in Example 1 was implemented under the conditions listed in Tables 1 and 2 below, except that the second pipe was made of SUS316.

**Comparative Example 4**

The same system as in Comparative Example 1 was implemented under the conditions listed in Tables 1 and 2 below, except that the second pipe was made of Inconel 601.

[TABLE 1]

| | First pipe | | | |
| | Inlet temperature | Outlet temperature | Operating temperature | Gas stream |
|---|---|---|---|---|
| Example 1 | 350°C | 300°C | 350±10°C | 99.99999 vol% $NH_3$ |
| Example 2 | 350°C | 300°C | 350±10°C | |
| Example 3 | 350°C | 300°C | 350±10°C | |
| Example 4 | 350°C | 340°C | 350±10°C | |
| Example 5 | 350°C | 340°C | 350±10°C | |
| Comparative Example 1 | - | | | |
| Comparative Example 2 | 350°C | 300°C | 350±10°C | 99.99999 vol% $NH_3$ |
| Comparative Example 3 | 350°C | 300°C | 350±10°C | |
| Comparative Example 4 | - | | | |

[TABLE 2]

| | Second pipe | | | | | |
| | Inlet temperature | Outlet temperature | Operating temperature | Gas stream (vol% of) | | |
| | | | | $NH_3$ | $H_2$ | $N_2$ |
|---|---|---|---|---|---|---|
| Example 1 | 475°C | 550°C | 510±10°C | 81.8 | 13.6 | 4.5 |
| Example 2 | 475°C | 550°C | 510±10°C | 81.8 | 13.6 | 4.5 |
| Example 3 | 475°C | 550°C | 510±10°C | 81.8 | 13.6 | 4.5 |
| Example 4 | 475°C | 550°C | 510±10°C | 97.2 | 2.1 | 0.7 |
| Example 5 | 475°C | 550°C | 510±10°C | 98.6 | 1.0 | 0.3 |
| Comparative Example 1 | 475°C | 550°C | 510±10°C | 99.99999 vol% $NH_3$ | | |
| Comparative Example 2 | 475°C | 550°C | 510±10°C | 81.8 | 13.6 | 4.5 |
| Comparative Example 3 | 475°C | 550°C | 510±10°C | 81.8 | 13.6 | 4.5 |
| Comparative Example 4 | 475°C | 550°C | 510±10°C | 99.99999 vol% $NH_3$ | | |

## Experimental Examples

### Experimental Example 1: Evaluation of corrosion resistance

In the above-described examples and comparative examples, the corrosion resistance of the inner surfaces of the first pipe and the second pipe was evaluated using metal specimens made of the same material as their inner surfaces (hereinafter, "corresponding metal specimens").

Under substantially the same conditions, the ammonia-induced nitridation reaction occurring on the inner surfaces of the first pipe and the second pipe was considered to proceed at substantially the same rate according to the same reaction equation on the surfaces of the corresponding metal specimens, even taking into account test errors and differences in surface conditions.

Therefore, the corrosion resistance evaluation results for the corresponding metal specimens were used as indicators for evaluating the corrosion resistance characteristics of the inner surfaces of the first and second pipes.

(1) Corrosion resistance of first pipe depending on operating temperature

1) In Example 1, cylindrical metal specimens having a circular cross-sectional diameter of 2 mm and a height of 200 mm were prepared using the same material as that of the first pipe (SUS304) (hereinafter referred to as "cylindrical specimens").

In addition, cylindrical specimens made of SUS316 and Inconel 625 were prepared using the same method and designated as Examples 1-1 and 1-2, respectively.

A vertical quartz tube reactor connected to a gas stream supply section, a gas stream discharge section and a furnace were prepared.

Each cylindrical specimen was mounted in the vertical quartz tube reactor, and the temperature inside the vertical quartz tube reactor was increased to the operating temperature at a heating rate of 10°C/min. At this time, a gas stream including 99.99999 vol% $NH_3$ was continuously supplied to the vertical quartz tube reactor.

The operating temperature of the vertical quartz tube reactor was increased in 10°C increments from 300°C to 450°C, and the vertical quartz tube reactor was operated at the operating temperature for 36 hours to obtain nitrided cylindrical specimens.

From one end of the nitrided cylindrical specimens, sectioning was performed at 5 mm intervals along the height in a direction perpendicular to the height, thereby obtaining 41 specimens. SEM images of the cut circular cross-sections of the obtained specimens were taken using a scanning electron microscope (SEM) (Helios PFIB instrument, Thermo Fisher Scientific). Appropriate magnification levels were selected to accurately measure the nitrided depths. For example, magnifications of 2000x and 500x were used for nitrided depths of 40 $\mu$m or less and greater than 40 $\mu$m, respectively.

For the SEM images, the elemental composition within the SEM images was analyzed using the energy dispersive X-ray spectroscopy (EDS) function of the same SEM instrument.

Based on the analysis results of the elemental composition, the nitrided depths were measured from three arbitrary points on the outermost edge of the circular cross-section toward the central axis.

The corrosion resistance was evaluated to be higher when the maximum value among the nitrided depths was smaller.

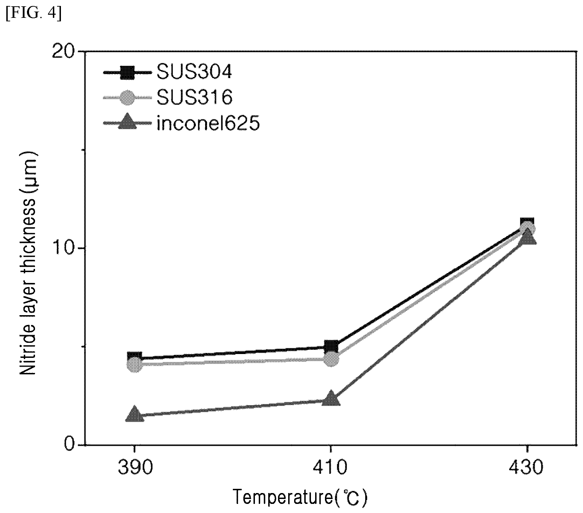

The results are shown in Table 3 and FIG. 4. Since it is impractical to present the nitrided depths at all temperatures in Table 3, representative data at 390°C, 410°C, and 430°C are described.

[TABLE 3]

| Operating temperature | Example 1 (SUS304) | Example 1-1 (SUS316) | Example 1-2 (Inconel 625) |
|---|---|---|---|
| 390°C | 4.4 $\mu$m | 4.1 $\mu$m | 1.5 $\mu$m |
| 410°C | 5.0 $\mu$m | 4.4 $\mu$m | 2.3 $\mu$m |
| 430°C | 11.2 $\mu$m | 11.0 $\mu$m | 10.5 $\mu$m |

2) Cylindrical specimens made of SUS304, SUS316, and Inconel 625 were prepared by the same method as described above.

The maximum nitrided depths were evaluated by the same method as described above, except that the operating time of the vertical quartz tube reactor was changed to 100 hours.

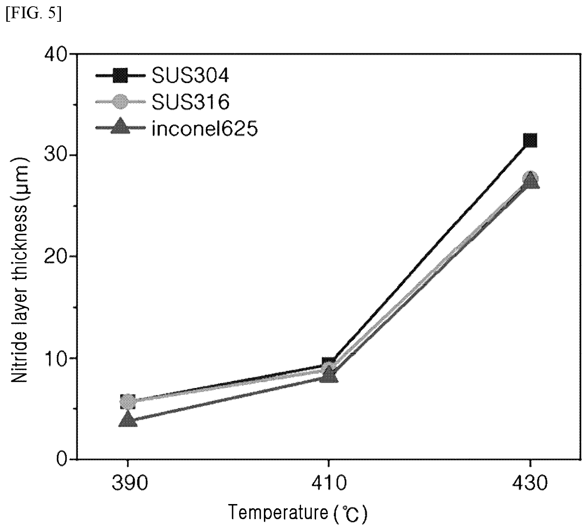

The results are shown in Table 4 and FIG. 5.

[TABLE 4]

| Operating temperature | Example 1 (SUS304) | Example 1-1 (SUS316) | Example 1-2 (Inconel 625) |
|---|---|---|---|
| 390°C | 5.7 $\mu$m | 5.7 $\mu$m | 3.8 $\mu$m |
| 410°C | 9.4 $\mu$m | 8.9 $\mu$m | 8.2 $\mu$m |
| 430°C | 31.5 $\mu$m | 27.7 $\mu$m | 27.3 $\mu$m |

From Tables 3 and 4, and FIGS. 4 and 5, it was confirmed that corrosion on the internal surface of the first pipe began to sharply increase at temperatures exceeding 410°C. In addition, as the operating time increased under conditions exceeding 410°C, the corrosion rate on the internal surface of the first pipe further accelerated.

(2) Corrosion resistance of first pipe depending on operating time

In Examples 1 to 5, cylindrical metal specimens having a circular cross-sectional diameter of 2 mm and a height of 200 mm were prepared using the same material as that of the first pipe (hereinafter referred to as "cylindrical specimens").

A vertical quartz tube reactor connected to a gas stream supply section, a gas stream discharge section and a furnace was prepared.

The cylindrical specimens were mounted in the vertical quartz tube reactor, and the temperature inside the vertical quartz tube reactor was increased at a heating rate of 10°C/min to the first pipe operating temperature corresponding to Table 1.

Thereafter, the cylindrical specimens were exposed to an environment corresponding to Table 1 for 100 hours from the time the first pipe operating temperature was reached, thereby obtaining nitrided cylindrical specimens.

For the nitrided cylindrical specimens, the maximum nitrided depths were evaluated by the same method as described above.

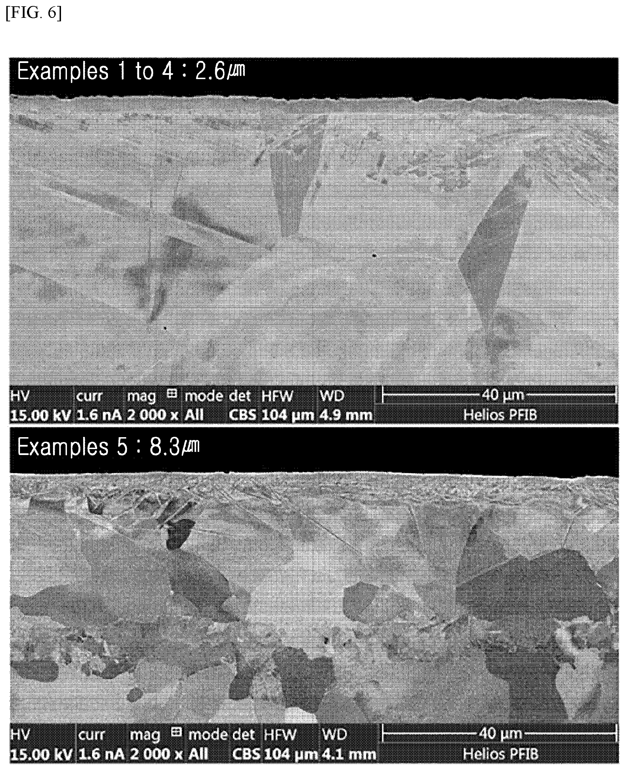

The results are shown in Table 5 and FIG. 6.

(3) Corrosion resistance of second pipe depending on operating time

In Examples 1 to 5 and Comparative Examples 1 to 4, cylindrical metal specimens having a circular cross-sectional diameter of 2 mm and a height of 200 mm were prepared using the same material as that of the second pipe (hereinafter referred to as "cylindrical specimens").

A vertical quartz tube reactor connected to a gas stream supply section, a gas stream discharge section and a furnace was prepared.

The cylindrical specimens were mounted in the vertical quartz tube reactor, and the temperature inside the vertical quartz tube reactor was increased at a heating rate of 10°C/min to the second pipe operating temperature corresponding to Table 2.

Thereafter, the cylindrical specimens were exposed to an environment corresponding to Table 2 for 100 hours from the time the second pipe operating temperature was reached, thereby obtaining nitrided cylindrical specimens.

For the nitrided cylindrical specimens, the maximum nitrided depths were evaluated by the same method as described above.

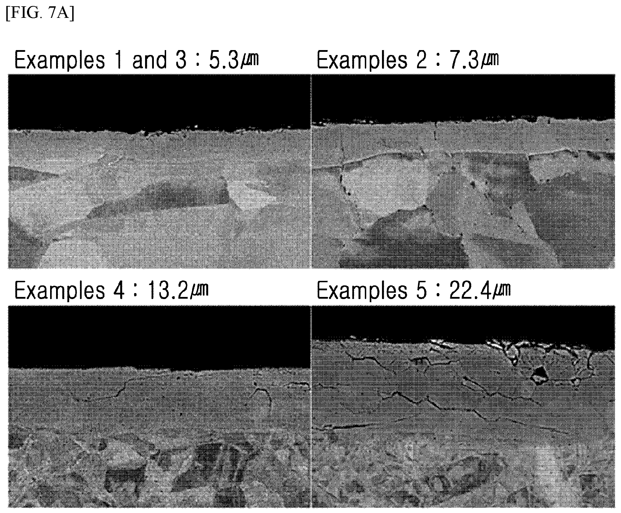

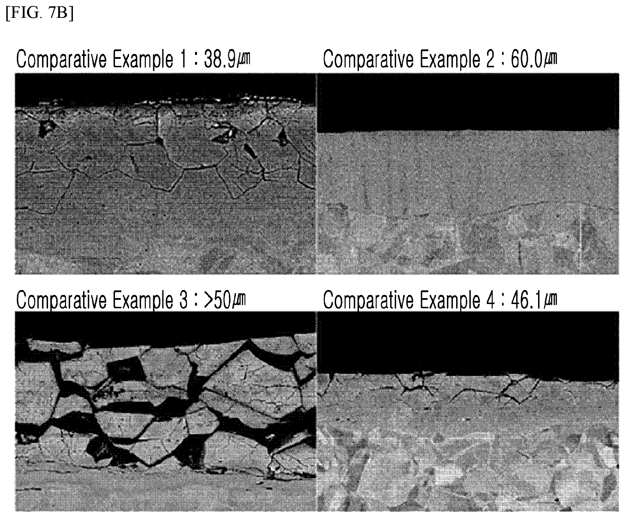

The results are shown in Table 5 and FIGS. 7A and 7B. The SEM measurement conditions in Examples 1 to 5 and Comparative Example 1 are as follows:

HV (High Voltage): 15.00 kV;
CURR (Beam Current): 1.6 nA;
MAG (Magnification): 2000x;
DET (Detector): CBS (Circular Backscatter Detector).

The SEM measurement conditions in Comparative Examples 2 to 4 are as follows:

HV (High Voltage): 15.00 kV;
CURR (Beam Current): 1.6 nA;
MAG (Magnification): 500x;
DET (Detector): CBS (Circular Backscatter Detector)

[TABLE 5]

|  | Corrosion resistance of first pipe (maximum nitride depth) | Corrosion resistance of second pipe (maximum nitride depth) |
|---|---|---|
| Example 1 | 2.6 $\mu$m | 5.3 $\mu$m |
| Example 2 | 2.6 $\mu$m | 7.3 $\mu$m |
| Example 3 | 8.3 $\mu$m | 5.3 $\mu$m |
| Example 4 | 2.6 $\mu$m | 13 $\mu$m |
| Example 5 | 2.6 $\mu$m | 22 $\mu$m |
| Comparative Example 1 | - | 39 $\mu$m |
| Comparative Example 2 | 2.6 $\mu$m | 60 $\mu$m |
| Comparative Example 3 | 2.6 $\mu$m | >50 $\mu$m |
| Comparative Example 4 | - | 46.1 $\mu$m |

Referring to Table 5, in Example 3, which employed a first pipe made of carbon steel, a relatively high level of corrosion was observed after long-term operation.

Conversely, the second pipes of the examples including the nickel-based alloy ($N_T$) satisfying Equation 1 described above exhibited minimal corrosion even after long-term operation, indicating improved reliability and stability.

In Example 5, due to the relatively low hydrogen concentration in the gas stream supplied to the second pipe, the corrosion resistance was reduced compared to other examples.

In Comparative Examples 1 and 4, a gas stream including 99.99999 vol% $NH_3$ was supplied directly to the high-temperature second pipe without passing through the first pipe, resulting in rapid nitridation, and thus, the reliability and stability deteriorated during long-term operation. In Comparative Example 4, where the second pipe was made of Inconel 601, the corrosion rate increased further.

In Comparative Examples 2 and 3, the second pipe was made of SUS304 and SUS316, respectively, and since these materials did not satisfy Equation 1, their corrosion resistance further deteriorated after long-term operation.

Experimental Example 2: Corrosion Rate Evaluation

(1) Corrosion rate of first pipe

In Examples 1 to 5, cylindrical metal specimens having a circular cross-sectional diameter of 2 mm and a height of 200 mm were prepared using the same material as that of the first pipe (hereinafter referred to as "cylindrical specimens").

A vertical quartz tube reactor connected to a gas stream supply section, a gas stream discharge section and a furnace were prepared.

The cylindrical specimens were mounted in the vertical quartz tube reactor, and the temperature inside the vertical quartz tube reactor was increased at a heating rate of 10°C/min to the first pipe operating temperature corresponding to Table 1.

Thereafter, the cylindrical specimens were exposed to an environment corresponding to Table 1 for 36 hours, 100 hours, 200 hours, and 400 hours, respectively, from the time the first pipe operating temperature was reached, thereby obtaining nitrided cylindrical specimens.

For the nitrided cylindrical specimens, the maximum nitrided depths were evaluated by the same method as described above.

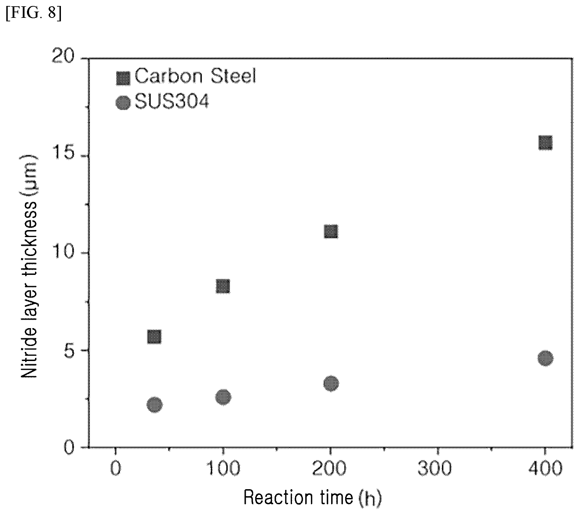

The results are shown in Table 6 and FIG. 8.

[TABLE 6]

| | | Examples 1, 2, 4 and 5 | Example 3 |
|---|---|---|---|
| Material | | SUS304 | Carbon steel |
| Maximum nitrided depth (μm) | 36 hr | 2.2 | 5.7 |
| | 100 hr | 2.6 | 8.3 |
| | 200 hr | 3.3 | 11.1 |
| | 400 hr | 4.6 | 15.7 |

According to Table 6, as the operating time increased at an operating temperature of $350 \pm 10$°C, the corrosion rate increased more significantly in Example 4, which employed a first pipe made of carbon steel, than in the other examples.

(2) Corrosion rate of second pipe

In Example 1 and Comparative Examples 2 and 3, cylindrical metal specimens having a circular cross-sectional diameter of 2 mm and a height of 200 mm were prepared using the same material as that of the second pipe (hereinafter referred to as "cylindrical specimens").

A vertical quartz tube reactor connected to a gas stream supply section and a furnace was prepared.

The cylindrical specimens were mounted in the vertical quartz tube reactor, and the temperature inside the vertical quartz tube reactor was increased at a heating rate of 10°C/min to the second pipe operating temperature corresponding to Table 2.

Thereafter, the cylindrical specimens were exposed to an environment corresponding to Table 2 for 36 hours, 100 hours, 200 hours, and 400 hours, respectively, from the time the second pipe operating temperature was reached, thereby obtaining nitrided cylindrical specimens.

For the nitrided cylindrical specimens, the maximum nitrided depths were evaluated by the same method as described above.

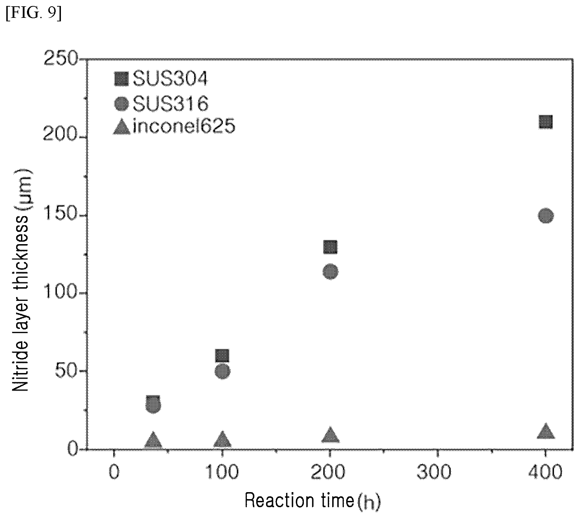

The results are shown in Table 7 and FIG. 9.

[TABLE 7]

|  |  | Example 1 | Comparative Example 2 | Comparative Example 3 |
|---|---|---|---|---|
| Material | | Inconel 625 | SUS304 | SUS316 |
| Maximum nitrided depth ($\mu$m) | 36 hr | 4.8 | 30 | 28 |
|  | 100 hr | 5.3 | 60 | 50 |
|  | 200 hr | 7.9 | 130 | 114 |
|  | 400 hr | 10.2 | 210 | 150 |

Referring to Table 7, at an operating temperature of $510\pm10°C$, the degree of nitridation for the second pipe in Example 1, which included the nickel-based alloy ($N_T$) satisfying Equation 1 described above, was very low. Even after long-term operation, the increase in the maximum nitrided depth was significantly reduced, demonstrating improved reliability and stability.

Conversely, in the comparative examples, which employed second pipes made of SUS304 and SUS316, respectively, the corrosion resistance deteriorated at the above operating temperature, and the increase in corrosion rate became more significant as the operating time increased.

**Claims**

1. An ammonia supply system (100), comprising:

    an ammonia supply unit (10);
    an ammonia demand unit (70);
    a connection line (20) that is arranged to connect the ammonia supply unit and the ammonia demand unit;
    a hydrogen supply unit (40); and
    one or more first hydrogen supply lines (30) that are arranged to connect the hydrogen supply unit (40) and the connection line (20), and are configured to supply a hydrogen gas stream,
    wherein the connection line (20) comprises a first pipe (21) configured to be controlled to an average temperature of 410°C or lower and a second pipe (22) configured to be controlled to an average temperature of greater than 410°C, and
    wherein the second pipe comprises a nickel-based alloy ($N_T$) satisfying Equation 1 below:

$$[\text{Equation 1}]$$

$$T \leq 15 \ \mu m,$$

    in Equation 1, T is the maximum value of nitrided depths measured from a side surface toward a central axis of a cylindrical specimen when the nickel-based alloy ($N_T$) is prepared as a cylindrical specimen having a diameter of 2 mm and a height of 200 mm, and the cylindrical specimen is exposed to a gas stream comprising 97.2% by volume $NH_3$, 2.1% by volume $H_2$, and 0.7% by volume $N_2$ in a temperature environment of 500°C for 100 hours, and the nitrided depths are measured using scanning electron microscopy (SEM) and energy dispersive X-ray spectroscopy (EDS) analysis.

2. The ammonia supply system (100) according to claim 1, further comprising a connection part that is arranged to connect the first pipe (21) and the second pipe (22),
    wherein the first hydrogen supply line (30) is arranged to be connected to at least one of the first pipe (21) and the second pipe (22), or to the connection part.

3. The ammonia supply system (100) according to claim 1 or 2, wherein the ammonia supply unit (10) and the first pipe (21) are arranged to be connected to each other, and

an ammonia gas stream introduced from the ammonia supply unit (10) into the first pipe (21) comprises ammonia in an amount of 90% by volume to 100% by volume with respect to the volume of the ammonia gas stream.

4. The ammonia supply system (100) according to any one of claims 1 to 3, wherein a flow rate ratio of the ammonia gas stream in the first pipe (21) to the hydrogen gas stream in the first hydrogen supply line (30) is 1:0.02 to 1:0.50, preferably 1:0.05 to 1:0.30, or more preferably 1:0.05 to 1:0.20.

5. The ammonia supply system (100) according to any one of claims 1 to 4, wherein the second pipe (22) is arranged to receive an ammonia gas stream from the first pipe (21),

   wherein the ammonia gas stream and the hydrogen gas stream are mixable in the second pipe (22) to form a mixed gas stream, and
   wherein an average volume ratio of ammonia ($NH_3$) to hydrogen ($H_2$) in the mixed gas stream is 70:30 to 98:2.

6. The ammonia supply system (100) according to any one of claims 1 to 5, wherein the first hydrogen supply line (30) is arranged to be connected to the second pipe (22), and
   a temperature from a connection point where the first hydrogen supply line (30) is connected to the second pipe (22) to a downstream end is controllable to be higher than 410°C and up to 800°C.

7. The ammonia supply system (100) according to any one of claims 1 to 5, wherein, when the entire length of the first pipe (21) is divided into 100 equal sections and numbered from a front end to a rear end as Regions 1 to 100, the first hydrogen supply line (30) is arranged to be connected to the first pipe (21) between Region 51 and Region 100.

8. The ammonia supply system (100) according to any one of claims 1 to 7, further comprising one or more second hydrogen supply lines (50) arranged to be connected to at least one of the first hydrogen supply lines (30) and configured to supply a hydrogen gas stream.

9. The ammonia supply system (100) according to claim 8, further comprising one or more third hydrogen supply lines (60) arranged to be connected to the second hydrogen supply line (50) and configured to supply a third hydrogen gas stream.

10. The ammonia supply system (100) according to claim 8 or 9, wherein the hydrogen supply unit (40) comprises an external hydrogen supply unit and an internal hydrogen supply unit,
    the first hydrogen supply line (30) being arranged to be connected to the external hydrogen supply unit to form a non-circulation line, and the second hydrogen supply line (50) being arranged to be connected to the internal hydrogen supply unit to form a circulation line together with the first hydrogen supply line.

11. The ammonia supply system (100) according to claim 10, wherein the second hydrogen supply line (50) is a return line configured to resupply a hydrogen gas stream recovered from the ammonia demand unit to the first hydrogen supply line (30).

12. A hydrogen production system (170) comprising the ammonia supply system (100) according to any one of claims 1 to 11,
    wherein the ammonia demand unit (70) comprises an ammonia decomposition unit (71A) and a hydrogen collection unit (72A).

13. A carbon-free power generation system (200) comprising the ammonia supply system (100) according to any one of claims 1 to 11,
    wherein the ammonia demand unit (70) comprises an ammonia combustion unit (71B) and a turbine power generation unit (72B).

14. A fuel cell system (300) comprising the ammonia supply system (100) according to any one of claims 1 to 11,
    wherein the ammonia demand unit (70) comprises a fuel cell unit (71C) comprising one or more fuel cell stacks.

15. A coupled renewable energy system using the hydrogen production system (170) of claim 12 and the carbon-free power generation system (200) of claim 13 or the fuel cell system (300) of claim 14 for the conversion and utilization of ammonia as an energy vector.

[FIG. 1]

[FIG. 2]

[FIG. 3]

[FIG. 4]

[FIG. 5]

[FIG. 6]

[FIG. 7A]

Examples 1 and 3 : 5.3$\mu$m    Examples 2 : 7.3$\mu$m

Examples 4 : 13.2$\mu$m    Examples 5 : 22.4$\mu$m

[FIG. 7B]

Comparative Example 1 : 38.9μm

Comparative Example 2 : 60.0μm

Comparative Example 3 : >50μm

Comparative Example 4 : 46.1μm

[FIG. 8]

[FIG. 9]

Europäisches
Patentamt

European
Patent Office

Office européen
des brevets

# EUROPEAN SEARCH REPORT

**Application Number**

EP 25 20 1435

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 625 908 A (JOHNSON MATTHEY PLC [GB]) 3 July 2024 (2024-07-03) * page 1, line 9 - line 12; claims; figure 4 * * page 2, line 21 - line 26 * * page 2, line 1 - line 8 * ----- | 1-15 | INV. C01B3/047 C22C19/03 B01J19/02 F02C3/22 H01M8/0606 H01M8/22 |
| A | US 2024/166503 A1 (WHITE VINCENT [GB] ET AL) 23 May 2024 (2024-05-23) * paragraph [0083] - paragraph [0084]; figure 1 * ----- | 1-15 | |
| A | JP 6 943524 B2 (SHOWA DENKO KK [JP]) 6 October 2021 (2021-10-06) * paragraphs [0015], [0029] - [0031], [0036], [0037]; figures 1,2 * ----- | 1-15 | |
| A | WO 2022/189560 A1 (TOPSOE AS [DK]) 15 September 2022 (2022-09-15) * page 7, line 4 - line 26 * ----- | 1-15 | |

**TECHNICAL FIELDS SEARCHED (IPC)**

C01B
C22C
F02C
B01J
H01M

The present search report has been drawn up for all claims

| Place of search | Date of completion of the search | Examiner |
|---|---|---|
| The Hague | 28 January 2026 | Engelen, Karen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 1435

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2026

| Patent document cited in search report | | Publication date | Patent family member(s) | | Publication date |
|---|---|---|---|---|---|
| GB 2625908 | A | 03-07-2024 | CN | 119998228 A | 13-05-2025 |
| | | | EP | 4619339 A1 | 24-09-2025 |
| | | | GB | 2625908 A | 03-07-2024 |
| | | | JP | 2025532364 A | 29-09-2025 |
| | | | KR | 20250106272 A | 09-07-2025 |
| | | | TW | 202440454 A | 16-10-2024 |
| | | | WO | 2024105393 A1 | 23-05-2024 |
| US 2024166503 | A1 | 23-05-2024 | AU | 2023266326 A1 | 06-06-2024 |
| | | | CA | 3220532 A1 | 21-05-2024 |
| | | | CN | 118056779 A | 21-05-2024 |
| | | | EP | 4378885 A1 | 05-06-2024 |
| | | | JP | 7747713 B2 | 01-10-2025 |
| | | | JP | 2024074792 A | 31-05-2024 |
| | | | KR | 20240074688 A | 28-05-2024 |
| | | | US | 2024166503 A1 | 23-05-2024 |
| JP 6943524 | B2 | 06-10-2021 | JP | 6943524 B2 | 06-10-2021 |
| | | | JP | WO2017154732 A1 | 10-01-2019 |
| | | | TW | 201803802 A | 01-02-2018 |
| | | | WO | 2017154732 A1 | 14-09-2017 |
| WO 2022189560 | A1 | 15-09-2022 | AR | 125527 A1 | 26-07-2023 |
| | | | EP | 4304980 A1 | 17-01-2024 |
| | | | JP | 2024510733 A | 11-03-2024 |
| | | | KR | 20230154201 A | 07-11-2023 |
| | | | WO | 2022189560 A1 | 15-09-2022 |

EPO FORM P0459